# EUROPÄISCHE PATENTSCHRIFT

(11) **EP 4 402 647 B1**
(45) Veröffentlichungstag und Bekanntmachung des Hinweises auf die Patenterteilung: **22.04.2026**
(21) Anmeldenummer: 22786900.5
(22) Anmeldetag: 15.09.2022
(51) Int. Cl.: G06V 10/44, G06V 10/774, G06V 20/56, G06V 10/98, G06V 10/82, G06V 10/778

(54) **VERFAHREN UND SYSTEM ZUM AUTOMATISCHEN ANNOTIEREN VON SENSORDATEN**
METHOD AND SYSTEM FOR AUTOMATICALLY ANNOTATING SENSOR DATA
PROCÉDÉ ET SYSTÈME D'ANNOTATION AUTOMATIQUE DE DONNÉES DE CAPTEURS

(30) Priorität: 17.09.2021 DE 102021124103
(43) Veröffentlichungstag der Anmeldung: 24.07.2024
(73) Patentinhaber: dSPACE SE & Co. KG, 33102 Paderborn (DE)
(72) Erfinder: RÖDLER, Daniel, 76133 Karlsruhe (DE); ROMANSKI, Simon, 76227 Karlsruhe (DE); BOTH, Fabian, 76227 Karlsruhe (DE); LINK, Maximilian, 76227 Karlsruhe (DE)
(86) Internationale Anmeldenummer: PCT/EP2022/075621
(87) Internationale Veröffentlichungsnummer: WO 2023/041628

(56) Entgegenhaltungen:
- DING XINGHAO ET AL: "Vehicle Type Recognition From Surveillance Data Based on Deep Active Learning", IEEE TRANSACTIONS ON VEHICULAR TECHNOLOGY, IEEE, USA, vol. 69, no. 3, 16 January 2020 (2020-01-16), pages 2477 - 2486, XP011778125, ISSN: 0018-9545, [retrieved on 20200313], DOI: 10.1109/TVT.2020.2967077
- PRIYANSHU MAKHIYAVIYA: "Audio Analytics for autonomous cars | Machine Learning | Deep Learning Audio Analytics - An important technology for autonomous cars", 17 March 2021 (2021-03-17), pages 1 - 8, XP093010656, Retrieved from the Internet <URL:https://volansys.com/blog/audio-analytics-an-important-technology-for-autonomous-cars/> [retrieved on 20221223]
- KHADIJA SHAHEEN ET AL: "Continual Learning for Real-World Autonomous Systems: Algorithms, Challenges and Frameworks", ARXIV.ORG, CORNELL UNIVERSITY LIBRARY, 201 OLIN LIBRARY CORNELL UNIVERSITY ITHACA, NY 14853, 26 May 2021 (2021-05-26), XP081969593

## Beschreibung

### Gebiet der Erfindung

Die vorliegende Erfindung betrifft Verfahren und Computersysteme zum automatischen Annotieren von Sensordatenframes, insbesondere Datenframes von einem Bildaufnahmesensor.

### Hintergrund

Das autonome Fahren verspricht nie dagewesene Niveaus bei Komfort und Sicherheit im täglichen Verkehr. Trotz enormer Investitionen durch verschiedene Unternehmen sind die bestehenden Ansätze nur unter eingeschränkten Verhältnissen anwendbar und/oder sehen nur eine Untermenge von wirklich autonomem Verhalten vor. Ein Grund dafür ist das Fehlen einer genügenden Menge und Vielfalt an verfügbaren Fahrtszenarien. Somit sind weitere Fortschritte durch den Bedarf an enormen Mengen ausreichend unterschiedlicher Trainingsdaten sowie Validierungsdaten (d.h. unabhängiger Ground-Truth-Daten) begrenzt. Die Aufbereitung von Trainingsdaten erfordert allgemein das Aufzeichnen von vielen verschiedenen Fahrtszenarien durch ein Fahrzeug, das mit einem Satz von Sensoren ausgestattet ist, insbesondere Bildaufnahmesensoren, wie etwa einer oder mehreren Kameras, einem Lidar-Sensor und/oder einem Radar-Sensor. Vor dem Verwenden dieser aufgezeichneten Szenarien als Trainingsdaten müssen sie annotiert werden.

Dies wird oft durch Annotationsdienstleister durchgeführt, die die aufgezeichneten Sensordaten empfangen und sie in Arbeitspakete für eine Vielzahl von menschlichen Arbeitskräften aufteilen, die auch als Labeler bezeichnet werden. Die genauen benötigten Annotationen (z.B. die zu unterscheidenden Objektklassen) hängen von jedem Projekt ab und sind in der detaillierten Labeling-Spezifikation angegeben. Der Kunde liefert die Rohdaten an den Annotationsdienstleister und erwartet hochwertige Annotationen gemäß seinen Angaben in einem kurzen Zeitrahmen. Die Anzahl der zum Abschließen des Annotationsprojekts benötigten Labeler erhöht sich mit wachsender Menge gelieferter Daten und erhöht sich mit sich verringerndem Zeitrahmen für eine feste Datenmenge. Aus diesem Grund können größere Annotationsprojekte, die z.B. genug Ground-Truth-Daten zum Validieren eines autonomen Fahrzeugs liefern würden, mit menschlicher Arbeit allein nicht machbar sein, sondern erfordern eine Automatisierung des Annotationsprozesses.

Automatisierungsansätze benutzen neuronale Netzwerke zum Labeln der aufgezeichneten Sensordaten. Ein anfänglicher Satz der empfangenen Daten wird manuell gelabelt und dann benutzt, um dedizierte neuronale Netzwerke zu trainieren. Sobald sie ausreichend trainiert sind, können die dedizierten neuronalen Netzwerke die Masse der aufgezeichneten Bildaufnahmesensordaten annotieren.

Aus dem Dokument "Vehicle Type Recognition from Surveillance Data Based on Deep Active Learning" von Xinghao Ding et al. ist ein Verfahren zum Trainieren eines neuronalen Netzes bekannt, bei dem inkrementell anhand einer Entropie bzw. eines Konfidenzmaßes Bilder ausgewählt, manuell gelabelt und für das Trainieren verwendet werden.

Verglichen mit einem rein manuellen Ansatz reduziert dies den Aufwand beträchtlich. Jedoch erfordert das Einhalten einer hohen Annotationsqualität immer noch zeitaufwendige Qualitätsüberprüfungen durch Menschen. Da der Qualitätssicherungsprozess immer noch bei allen Annotationen angewendet werden muss, besteht eine lineare Beziehung zwischen dem Projektvolumen und dem zum Erfüllen von Projektanforderungen nötigen Arbeitsaufwand.

Somit werden verbesserte Verfahren zum automatischen Annotieren von Sensordaten, insbesondere Bildaufnahmesensordaten, benötigt; es wäre besonders wünschenswert, eine hohe Annotationsqualität mit einer reduzierten Anzahl manueller Qualitätsüberprüfungen sicherzustellen.

### Zusammenfassung der Erfindung

Die Erfindung wird in den angehängten Ansprüchen definiert. Es ist ein Ziel der vorliegenden Erfindung, Verfahren und Computersysteme zum automatischen Annotieren von Sensordatenframes, insbesondere Videoframes oder Lidar-Punktwolken, bereitzustellen.

In einem ersten Aspekt der Erfindung wird ein computerimplementiertes Verfahren zum automatischen Annotieren von Sensordatenframes bereitgestellt; das Verfahren umfasst
Empfangen einer Vielzahl von Sensordatenframes,
Gruppieren der Frames in eine Vielzahl von Paketen auf Grundlage mindestens eines Bedingungsattributs, wobei das Bedingungsattribut eine Umgebungsbedingung beschreibt, die während des Aufzeichnens des Sensordatenframes bestand,
Annotieren der Frames aus einem ersten Paket unter Verwendung eines neuronalen Netzwerks, wobei das Annotieren ein Zuweisen mindestens eines Datenpunkts zu jedem Frame umfasst, wobei das erste Paket Frames umfasst, für die das mindestens eine Bedingungsattribut in einem ausgewählten Wertebereich liegt,
Auswählen einer ersten Stichprobe von einem oder mehreren Frames aus dem ersten Paket und Bestimmen eines Qualitätsmaßes für die Datenpunkte, wobei,
wenn der Computer ermittelt, dass das Qualitätsmaß für mindestens einen Frame in der ersten Stichprobe unterhalb eines vordefinierten Schwellenwerts liegt, das Verfahren weiter umfasst
Empfangen korrigierter Annotationen für die Frames in der ersten Stichprobe,
Nachtrainieren des neuronalen Netzwerks auf Grundlage der Frames in der ersten Stichprobe,
Auswählen einer zweiten Stichprobe von einem oder mehreren Frames aus den Frames des ersten Pakets, die nicht in der ersten Stichprobe enthalten waren,
Annotieren der Frames der zweiten Stichprobe mit dem nachtrainierten neuronalen Netzwerk,
Empfangen eines Qualitätsmaßes für die Datenpunkte und Sicherstellen, dass das Qualitätsmaß für die Frames in der zweiten Stichprobe oberhalb eines vordefinierten Schwellenwerts liegt,
Annotieren der verbleibenden Frames des ersten Pakets mit dem nachtrainierten neuronalen Netzwerk, und
Exportieren der annotierten Frames des ersten Pakets.

Der Host-Computer kann als ein einzelner Standard-Computer verwirklicht sein, umfassend einen Prozessor, wie etwa einen Universal-Mikroprozessor, eine Anzeigevorrichtung und eine Eingabevorrichtung. Alternativ kann das Host-Computersystem einen oder mehrere Server umfassen, die eine Vielzahl von Verarbeitungselementen umfassen, wobei die Server über ein Netzwerk mit einem Client verbunden sind, der eine Anzeigevorrichtung und eine Eingabevorrichtung umfasst. Somit kann die Annotationssoftware teilweise oder vollständig auf einem entfernten Server ausgeführt werden, wie etwa einer Computer-Cloud, sodass örtlich nur eine grafische Benutzerschnittstelle ausgeführt zu werden braucht. Das Exportieren der annotierten Frames kann beispielsweise ein Speichern der Frames auf einem externen Datenträger und/oder ein Konvertieren bzw. Zusammenfassen in ein vorgegebenes Datenformat umfassen.

Durch das Gruppieren von Sensordatenframes auf Grundlage eines Bedingungsattributs, das Umgebungsbedingungen beschreibt, die zur Zeit der Aufzeichnung bestanden, können mögliche Korrelationen zwischen dem Bedingungsattribut und der Genauigkeit der Annotation berücksichtigt werden. Eine Umgebungsbedingung, die während des Aufzeichnens des Frames bestand, kann einen Einfluss auf die Genauigkeit der Annotationen haben. Für Annotationen, die mehrere Datenpunkte umfassen, kann der Einfluss verschieden sein, abhängig von dem Datenpunkt. Wenn die Sensordaten bei Nacht aufgenommene Kamerabilder umfassen, kann die Position und/oder Klasse eines Objekts schwieriger zu bestimmen sein. Jedoch kann ein Attribut eines Autos, wie etwa der Zustand einer Leuchtanzeige, leichter wahrgenommen werden als bei vollem Tageslicht. Die Erfindung ermöglicht es, Umgebungsbedingungen zu erkennen, die die Annotationsgenauigkeit beeinträchtigen, und das neuronale Netzwerk unter diesen Bedingungen durch ein selektives Nachtraining zu verbessern. Da das Nachtraining gezielt für problematische Umgebungsbedingungen erfolgt, wird der gesamte Trainingsaufwand reduziert. Dadurch wird weiterhin die für das Training erforderliche Rechenleistung und somit auch der Energieverbrauch reduziert.

Der Begriff "neuronales Netzwerk" kann sich auf ein einzelnes neuronales Netzwerk, eine Kombination verschiedener neuronaler Netzwerke gemäß einer vorgegebenen Architektur oder eine beliebige Art von auf maschinellem Lernen basierter Technik beziehen, die aus Beispieldaten in einer überwachten, teilüberwachten oder unüberwachten Weise lernt. Für verschiedene Datenpunkte können verschiedene neuronale Netzwerke verwendet werden; die Objektposition und/oder -klassifizierung kann mit einem ersten neuronalen Netzwerk bestimmt werden, während Attribute des Objekts mit mindestens einem weiteren neuronalen Netzwerk bestimmt werden können.

Weil manuelle Arbeit nur zum Erstellen von Trainings-, Test- und/oder Validierungsdaten zum systematischen Verbessern des neuronalen Netzwerks oder einer anderen auf maschinellem Lernen basierten Automatisierungskomponente für die Annotation der Frames verwendet wird, kann der Aufwand für große Annotationsprojekte beträchtlich reduziert werden. Typischerweise genügt nach einigen Iterationen des Nachtrainierens des neuronalen Netzwerks das Qualitätsniveau für ein Liefern von Automatisierungsergebnissen, d.h. Annotationen durch das neuronale Netzwerk, ohne weitere manuelle Überprüfungen. Das erfindungsgemäße Verfahren reduziert ferner den notwendigen manuellen Aufwand und die Zeit durch ein Fokussieren des Nachtrainings auf diejenigen Bedingungen, bei denen es noch an Annotationsqualität mangelt.

Als Qualitätsmaß kann beispielsweise eine Flächenüberdeckung zwischen einer automatisch erstellten Bounding Box und einer manuell im Rahmen der Qualitätskontrolle erstellten Bounding Box herangezogen werden. Auch kann eine maximale Anzahl und/oder ein maximaler Anteil falsch zugeordneter Objektklassen und/oder false positives und/oder false negatives gefordert werden. Das Qualitätsmaß wäre dann beispielsweise unterhalb des vordefinierten Schwellenwerts, wenn die Bounding Boxes eine zu geringe Überdeckung haben. Als Qualitätsmaß kann auch vorgegeben sein, dass in einer Stichprobe aus einer vorgegebenen Anzahl von Frames maximal eine vorgegebene Anzahl von false positives bzw. fälschlich erkannter Objekte und/oder false negatives bzw. fälschlich nicht erkannter Objekte auftreten darf. Das Qualitätsmaß wäre dann beispielsweise unterhalb des vordefinierten Schwellenwert, wenn die maximal erlaubte Anzahl nicht erkannter Objekte in der Stichprobe überschritten wurde.

Die Schritte des Auswählens einer zweiten Stichprobe von Frames aus dem ersten Paket und des Annotierens verbleibender Frames des ersten Pakets mit dem nachtrainierten Netzwerk können vertauscht werden. Zum Beispiel können alle verbleibenden Frames des ersten Pakets mit dem nachtrainierten Netzwerk annotiert werden, bevor eine zweite Stichprobe ausgewählt wird. Erfolgt nur ein Annotieren der Frames der zweiten Stichprobe mit dem nachtrainierten Netzwerk und ein Aufschieben des Annotierens weiterer Frames, bis eine genügende Annotationsqualität sichergestellt wurde, so reduziert dies den Berechnungsaufwand in Fällen, wo das neuronale Netzwerk mehr als einmal nachtrainiert werden muss, und beschleunigt somit den Nachtrainings- und Annotationsprozess.

In einer Ausführungsform umfassen die empfangenen Sensordaten Frames von mindestens einem Bildaufnahmesensor, wie etwa einer oder mehreren Kameras, einem Lidar-Sensor und/oder einem Radar-Sensor. Die empfangenen Sensordaten können auch zusätzliche Sensordaten umfassen, die gleichzeitig mit den Bildaufnahmesensordaten aufgezeichnet sind, wie etwa eine GPS-Position, eine Beschleunigung des Fahrzeugs oder Daten von einem Regensensor. Für Bildframes, d.h. Frames mit Bilddaten bzw. Datenframes von einem Bildaufnahmesensor, ist das Bedingungsattribut vorzugsweise ein geografischer Ort, eine Tageszeit, eine Wetterbedingung, eine Sichtbedingung, ein Straßentyp, ein Abstand zu einem Objekt und/oder eine Verkehrsdichte. Der Abstand zu einem Objekt kann ein Abstand zu dem nächstgelegenen Objekt, ein Abstand zu einem fernsten Objekt oder ein durchschnittlicher Abstand zu einer Vielzahl von in dem Frame erkannten Objekten sein; durch ein Berücksichtigen des Abstands eines Objekts als eine Umgebungsbedingung beim Aufzeichnen kann der Einfluss auf die Objekterfassungs- und/oder Klassifizierungsleistung eines neuronalen Netzwerks quantifiziert werden. Für einen Bildframe umfasst der mindestens eine Datenpunkt vorzugsweise eine Position eines Objekts, eine Klasse eines Objekts, eine Position einer Kante eines Begrenzungsrahmens, einen Grad der Überdeckung eines Objekts durch andere Objekte, eine Korrelierung eines Objekts in dem Bildframe mit einem Objekt in einem vorangehenden oder nachfolgenden Bildframe (als Ergebnis eines Verfolgens des Objekts) und/oder eine Aktivierung einer Leuchtanzeige, wie etwa eines Fahrtrichtungsanzeigers oder eines Bremslichts. Die Anzahl von Datenpunkten kann vom Inhalt des Bildframes abhängen, beispielsweise vielen Autos und Fußgängern in einer Großstadtszene mit einer entsprechenden Anzahl von Objektpositionen, Objektklassifizierungen und möglichen Attributen für die entsprechende Objektklasse.

In einer Ausführungsform umfassen die empfangenen Sensordaten Audio-Frames, die durch mindestens ein Mikrofon aufgezeichnet sind. Für Audio-Frames, also Frames mit Audiodaten, ist das Bedingungsattribut vorzugsweise ein geografischer Ort, ein Geschlecht und/oder ein Alter einer Sprecherin/eines Sprechers, die/der aufgenommen wurde, eine Raumgröße und/oder ein Maß von Hintergrundgeräuschen. Für Audio-Frames umfasst der mindestens eine Datenpunkt ein oder mehrere Textwörter, die aus dem Audio-Frame erkannt sind. Wörter können aus einer Vielzahl von nachfolgenden Audio-Frames erkannt werden, sodass ein Datenpunkt aus einer Vielzahl von Audio-Frames abgeleitet werden kann. Die Schwierigkeit beim Erkennen von Sprache kann z.B. vom Frequenzbereich abhängen, den eine Sprecherin/ein Sprecher hervorbringt, vom Vorliegen von Hall oder Echo aus dem Raum und/oder von einem Niveau vorhandener Hintergrundgeräusche.

Vorzugsweise umfasst der Schritt des Empfangens einer Vielzahl von Sensordatenframes einen Schritt des Vorverarbeitens der Frames, wobei mindestens eins der Bedingungsattribute für einen Frame durch ein dediziertes neuronales Netzwerk auf Grundlage des Frames bestimmt wird, und/oder mindestens eins der Bedingungsattribute für einen Frame auf Grundlage zusätzlicher Sensordaten bestimmt wird, die gleichzeitig mit den Frames aufgezeichnet wurden. Die zusätzlichen Sensordaten können kombiniert und/oder für Anfragen bei verschiedenen Diensten verwendet werden, die z.B. die Wetterbedingungen, einen auf der Zeit und dem geografischen Ort beruhenden Typ von Beleuchtungsbedingungen angeben.

In einer Ausführungsform umfasst die erste Stichprobe zwei oder mehr aus dem ersten Paket ausgewählte Frames. Vorzugsweise werden, sobald der Computer ermittelt, dass das Qualitätsmaß für die erste Stichprobe unterhalb des vorgegebenen Schwellenwerts liegt, keine weiteren Berechnungen an den Frames aus dem ersten Paket durchgeführt, bis korrigierte Annotationen für die Frames in der ersten Stichprobe empfangen werden. Zusätzliche Frames aus der ersten Gruppe können manuell annotiert werden und zu den Frames der ersten Stichprobe hinzugefügt werden, sodass ein größerer Datensatz zum Nachtrainieren des Modells verwendet werden kann. Durch ein Aufschieben weiterer Verarbeitung, bis das neuronale Netzwerk nachtrainiert worden ist, werden bedeutende Mengen an Zeit und Energie eingespart.

Vorzugsweise hängt die Auswahl von Frames für die erste Stichprobe von den Datenpunkten ab, für die das Qualitätsmaß zu bestimmen ist, insbesondere eine zufällige Auswahl einzelner Frames für die Objekterfassung und/oder eine zufällige Auswahl von Chargen aufeinanderfolgender Frames für die Objektverfolgung. Durch ein Anwenden einer intelligenten Strategie zur Stichprobenentnahme wird die durch Nachtrainieren erzielbare Verbesserung maximiert. Ein Objektdetektor, wie etwa zur Verkehrszeichen-Erkennung, profitiert von Trainingsdaten hoher Varianz, sodass eine zufällige Auswahl einzelner Frames eine nützliche erste Stichprobe ist. Andererseits profitiert eine Tracking-Komponente von fortlaufenden Daten, da nur dann ein Tracking desselben Objekts zwischen aufeinanderfolgenden Frames stattfinden kann. In diesem Fall würde als Stichprobe zweckmäßigerweise zufällig eine Reihe aufeinanderfolgender Frames - beispielsweise immer 10 - für eine Vielfalt von Objekten ausgewählt. Als Beispiel würde eine intelligente Probenentnahme die Frames 10 bis 20 sowie die Frames 100 bis 110 und 235 bis 245 für die erste Stichprobe nehmen, wenn sie ein Qualitätsmaß für eine Tracking-Komponente bestimmt. Um eine hohe Varianz in der Stichprobe zu erhalten, kann die Softwarekomponente, die die Probennahme durchführt, einen zeitlichen Mindestabstand zwischen Stichproben vorschreiben, um sicherzustellen, dass verschiedene Frames unter unterschiedlichen Umgebungsbedingungen aufgenommen wurden. Zusätzlich oder alternativ können ein oder mehrere Attribute bei der Probennahme berücksichtigt werden. Wenn beispielsweise eine Stichprobe zum Quantifizieren der Fähigkeiten des Objektdetektors bei Nacht ausgewählt wird, können verschiedene Umgebungen, wie etwa Großstadt, Land oder Autobahn vorgeschrieben werden. Die zufällige Auswahl würde dann zwischen allen Stichproben durchgeführt werden, die das vorgeschriebene Kriterium erfüllen.

In einer Ausführungsform werden die Schritte des Auswählens einer aktuellen Stichprobe von einem oder mehreren Frames aus dem ersten Paket und des Bestimmens eines Qualitätsmaßes für die Datenpunkte sowie des Empfangens korrigierter Annotationen für die Frames in der aktuellen Stichprobe und des Nachtrainierens des neuronalen Netzwerks auf Grundlage der Frames in der aktuellen Stichprobe wiederholt, bis das Qualitätsmaß für die Frames in der aktuellen Stichprobe oberhalb eines vordefinierten Schwellenwerts liegt oder das erste Paket keine verbleibenden Frames umfasst. Zweckmäßigerweise wird das neuronale Netzwerk nachtrainiert, bis auch für den Annotationsprozess nachteilige Umgebungsbedingungen korrekt behandelt werden können.

Vorzugsweise werden ein Annotieren von Sensordaten und ein Aufzeichnen von Sensordaten abwechselnd oder gleichzeitig durchgeführt, und wenn ermittelt wird, dass das Qualitätsmaß für mindestens einen Frame in der ersten Stichprobe unterhalb eines vordefinierten Schwellenwerts liegt, fordert der Computer das Aufzeichnen zusätzlicher Sensordaten an, für die das mindestens eine Bedingungsattribut in dem gewählten Wertebereich des ersten Pakets liegt. Ein Wertebereich des Bedingungsattributs kann gewählt werden, indem ein Testfahrzeug mit einer automatisierten Aufzeichnungsvorrichtung ausgestattet wird, die ein Auswahlprogramm ausführt, das eine Aufzeichnung auslöst, sobald eine vordefinierte Aufzeichnungsbedingung erfüllt ist, oder durch ein Auffordern eines Testfahrers, unter bestimmten Bedingungen zu fahren, z.B. bei Nacht. Somit werden neue Daten zumindest primär für diejenigen Umgebungsbedingungen aufgezeichnet, für die das neuronale Netzwerk weiteres Training benötigt. Durch ein sorgfältiges Wählen von Trainingsdaten wird die Verbesserung pro Trainingsaufwand maximiert. Somit werden die für das Training benötigte Rechenleistung und auch der Energieverbrauch verringert.

In einem zweiten Aspekt der Erfindung ist ein computerimplementiertes Verfahren zum automatischen Annotieren von Sensordaten vorgesehen, die Frames umfassen, wie etwa Video- oder Audio-Frames. Mindestens ein Prozessor eines Host-Computers führt das Verfahren durch, wobei das Verfahren umfasst:
a) Empfangen einer Vielzahl von Sensordatenframes,
b) Gruppieren der Frames in Paketen auf Grundlage mindestens eines Bedingungsattributs, wobei das Bedingungsattribut eine Umgebungsbedingung beschreibt, die während des Aufzeichnens des Sensordatenframes bestand,
c) Annotieren der Frames aus einem ersten Paket unter Verwendung eines neuronalen Netzwerks, wobei das Annotieren ein Zuweisen mindestens eines Datenpunkts zu jedem Frame umfasst, wobei das erste Paket Frames umfasst, für die das mindestens eine Bedingungsattribut in einem ausgewählten Wertebereich liegt,
d) Auswählen einer ersten Stichprobe von einem oder mehreren Frames aus dem ersten Paket und Bestimmen eines Qualitätsmaßes für die Datenpunkte,
e) Ermitteln, dass das Qualitätsmaß für mindestens einen Frame in der ersten Stichprobe unterhalb eines vordefinierten Schwellenwerts liegt,
f) Empfangen korrigierter Annotationen für die Frames in der ersten Stichprobe und Nachtrainieren des neuronalen Netzwerks mit den Frames in der ersten Stichprobe,
g) Annotieren mindestens eines der verbleibenden Frames des ersten Pakets mit dem nachtrainierten neuronalen Netzwerk,
h) Auswählen einer zweiten Stichprobe von einem oder mehreren Frames aus den mindestens einen verbleibenden annotierten Frames des ersten Pakets und Bestimmen eines Qualitätsmaßes für die Datenpunkte,
i) Ermitteln, dass das Qualitätsmaß für die Frames in der zweiten Stichprobe oberhalb eines vordefinierten Schwellenwerts liegt,
j) Annotieren der verbleibenden Frames aus dem ersten Paket mit dem nachtrainierten neuronalen Netzwerk, und
k) Exportieren der annotierten Frames.

Ein Aspekt der Erfindung betrifft auch ein nichtflüchtiges computerlesbares Medium, enthaltend Anweisungen, die, wenn sie durch einen Mikroprozessor eines Computersystems ausgeführt werden, das Computersystem veranlassen, das erfindungsgemäße Verfahren wie oben oder in den angefügten Ansprüchen beschrieben auszuführen.

In einem weiteren Aspekt der Erfindung ist ein Computersystem vorgesehen, das einen Host-Computer umfasst, der einen Prozessor, einen Arbeitsspeicher, eine Anzeige, eine Vorrichtung für menschliche Eingabe und einen nichtflüchtigen Speicher, insbesondere eine Festplatte oder ein Festkörperlaufwerk, umfasst. Der nichtflüchtige Speicher enthält Anweisungen, die, wenn sie durch den Prozessor ausgeführt werden, das Computersystem veranlassen, das erfindungsgemäße Verfahren auszuführen.

Der Prozessor kann ein Universal-Mikroprozessor sein, der üblicherweise als die Zentraleinheit eines Personal Computers verwendet wird, oder er kann ein oder eine Vielzahl von Verarbeitungselementen umfassen, die ausgelegt sind zum Ausführen spezieller Berechnungen, wie etwa einen Grafikprozessor. In alternativen Ausführungsformen der Erfindung kann der Prozessor durch eine programmierbare Logikvorrichtung ersetzt oder ergänzt werden, wie etwa einen FPGA, der dazu konfiguriert ist, einen festen Funktionsumfang bereitzustellen, und/oder einen IP-Core-Mikroprozessor umfassen kann.

### Kurze Beschreibung der Zeichnungen

Ein besseres Verständnis der vorliegenden Erfindung kann erlangt werden, wenn die folgende genaue Beschreibung der bevorzugten Ausführungsform in Verbindung mit den folgenden Zeichnungen betrachtet wird, in der:
Fig. 1 eine beispielhafte Skizze eines Computersystems ist;
Fig. 2 ein Beispiel eines Video-Frames mit einem schematischen Diagramm möglicher Datenpunkte in dem Einschub links oben ist;
Fig. 3 ein schematisches Diagramm eines beispielhaften Pakets von Video-Frames ist;
Fig. 4 ein schematisches Diagramm eines beispielhaften Pakets von Video-Frames ist, die gemäß einer Tageszeit- und Wetterangabe gruppiert sind;
Fig. 5 ein schematisches Diagramm ist, das die Korrelation zwischen Umgebungsbedingungen und Qualität der Annotationen darstellt;
Fig. 6 ein schematisches Diagramm eines Automatisierungssystems ist, das ein Verfahren gemäß der Erfindung durchführt.

In den Figuren sind ähnliche Elemente mit denselben Buchstaben bezeichnet. Während die Erfindung empfänglich für verschiedene Abwandlungen und alternative Formen ist, sind in der Zeichnung als Beispiel bestimmte Ausführungsformen gezeigt und sind hier genau beschrieben. Es versteht sich jedoch, dass die Zeichnung und die genaue Beschreibung dazu die Erfindung nicht auf die offenbarte spezielle Form einschränken sollen. Im Gegenteil soll die Erfindung alle folgenden Abwandlungen, Äquivalente und Alternativen innerhalb des Erfindungsgeists und des Geltungsbereichs der vorliegenden Erfindung abdecken, wie sie durch die angefügten Ansprüche definiert sind.

### Genaue Beschreibung

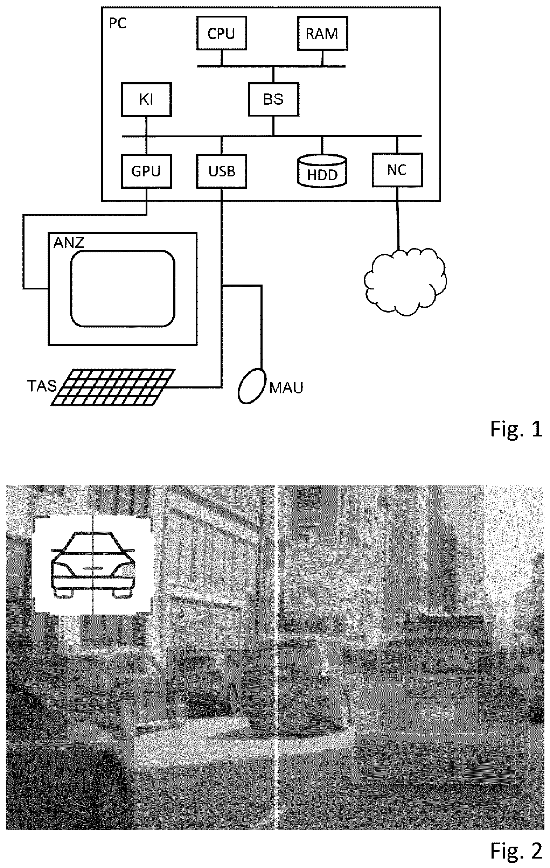

Fig. 1 stellt eine beispielhafte Ausführungsform eines Computersystems dar.

Die gezeigte Ausführungsform umfasst einen Host-Computer PC mit einer Anzeige ANZ und Benutzerschnittstellenvorrichtungen, wie etwa einer Tastatur TAS und einer Maus MAU; ferner kann ein externer Server über ein Netzwerk angeschlossen sein, wie durch ein Wolkensymbol angedeutet.

Der Host-Computer PC umfasst mindestens einen Prozessor CPU mit einem oder mehreren Kernen, einen Arbeitsspeicher RAM und eine Anzahl von Geräten, die an einen örtlichen Bus (wie etwa PCI-Express) angeschlossen sind, der Daten mit der CPU über einen Buscontroller BS austauscht. Die Geräte umfassen z.B. einen Grafikprozessor GPU zum Ansteuern der Anzeige, eine Steuerung USB zum Anschließen von Peripheriegeräten, einen nichtflüchtigen Speicher HDD, wie etwa eine Festplatte oder ein Festkörperlaufwerk, und eine Netzwerkschnittstelle NC. Ferner kann der Host-Computer einen dedizierten Beschleuniger KI für neuronale Netzwerke umfassen. Der Beschleuniger kann ausgeführt sein als eine programmierbare Logikvorrichtung, wie etwa einen FPGA, als ein Grafikprozessor, der für allgemeine Berechnungen geeignet ist, oder als eine anwendungsspezifische integrierte Schaltung. Vorzugsweise enthält der nichtflüchtige Speicher Anweisungen, die, wenn sie durch einen oder mehrere Kerne des Prozessors CPU ausgeführt werden, das Computersystem veranlassen, ein erfindungsgemäßes Verfahren auszuführen.

In alternativen Ausführungsformen, in der Figur als eine Wolke angedeutet, kann der Host-Computer einen oder mehrere Server umfassen, die ein oder mehrere Verarbeitungselemente umfassen, wobei die Server über ein Netzwerk mit einem Client verbunden sind, der eine Anzeigevorrichtung und eine Eingabevorrichtung umfasst. Somit kann die Annotationsumgebung teilweise oder vollständig auf einem entfernten Server ausgeführt werden, wie etwa in einer Cloud-Computereinrichtung. Ein Personal Computer kann als ein Client verwendet werden, der über ein Netzwerk eine Anzeigevorrichtung und eine Eingabevorrichtung umfasst. Alternativ kann eine grafische Benutzerschnittstelle der Annotationsumgebung auf einem tragbaren Computersystem angezeigt werden, wie insbesondere einem Smartphone oder einem Tablet mit einer Touchscreen-Benutzeroberfläche.

Fig. 2 stellt einen beispielhaften Video-Frame mit einem schematischen Diagramm möglicher Datenpunkte in dem Einschub links oben dar.

Die Figur stellt ein Foto oder einen Frame einer Großstadtszene dar. Ein solcher Frame kann ein Teil einer Videoaufzeichnung sein. Allgemein kann eine durch einen Kunden bereitgestellte Aufzeichnung aus Video- oder Audiodaten bestehen, die einen aufeinanderfolgenden Kontext darstellen, wie etwa z.B. 5 Minuten Fahrt, aufgezeichnet über eine Kamera und einen LiDAR-Sensor, oder eine 10-minütige Sprachaufzeichnung. Videoaufzeichnungen könnten beispielsweise aus einer Reihe aufeinanderfolgender Frames bestehen, die wiederum eine Reihe von Objekten aufnehmen. Das neuronale Netzwerk verarbeitet die Aufzeichnung, um Annotationen zu erstellen, die eine Vielzahl von Datenpunkten umfassen können, wobei jeder Datenpunkt einen spezifischen Aspekt beschreibt.

Ein Datenpunkt ist ein Parameter, der eine bestimmte Eigenschaft einer Aufzeichnung beschreibt, und kann auf alle Detailebenen angewendet werden. Detailebenen können die gesamte Aufzeichnung, eine Reihe aufeinanderfolgender oder zufälliger Frames, ein einzelner Frame oder ein Objekt auf einem Frame sein. Ein spezifisches Beispiel wäre eine Annotation für ein Auto, die aus einem Begrenzungsrahmen besteht, der die Position des Autos innerhalb einer gewissen Genauigkeit beschreibt, eine vertikale Linie, die die Kante des Autos markiert, eine Klassifizierung zum Beschreiben des Typs des Autos, Attribute für Beschneidung oder Verdeckung, Blinker, Bremslichter, Farbe und so weiter. Datenpunkte können Klassen, Rahmen, Segmente, Polygone, Linienzüge, Attribute, wie etwa Blinker, Bremslichter, Farben, Unterklassen, Tracking-Informationen, Verdeckungsgrad, Beschneidungsgrad, komplexe Klassen, die die Relevanz eines Objekts/Frames/Clips beschreiben, Ton, Text, Gefühl oder eine beliebige andere automatisiert ermittelbare Information sein.

In dem Einschub links oben in der Figur sind verschiedene Datenpunkte für ein Auto dargestellt. Autos können von verschiedenen Typen sein, z.B. ein Lieferwagen, ein SUV oder ein Sportwagen. Die Position oder vielmehr die Maße eines Autos sind im Allgemeinen durch eine Bounding Box angegeben, d.h. einen rechteckigen Rahmen oder ein Quader, der das Auto umschließt. Vertikale Linien geben die Begrenzungen des Autos an. Ein weiterer möglicher Datenpunkt für ein Auto ist die Aktivierung einer Leuchtanzeige, wie etwa des in dem Einschub gezeigten Fahrtrichtungsanzeigers.

Eine Vielzahl von Autos ist in dem Frame vorhanden, jedes durch einen Begrenzungsrahmen umschlossen. Autos können vollständig sichtbar sein, wie etwa das direkt vor der Kamera fahrende, oder sie können verdeckt sein. Die Verkehrsdichte der Großstadtszene kann die Annotationsqualität beeinträchtigen, indem sie z.B. eine genaue Bestimmung der Grenzen des Begrenzungsrahmens durch Verdecken schwierig macht.

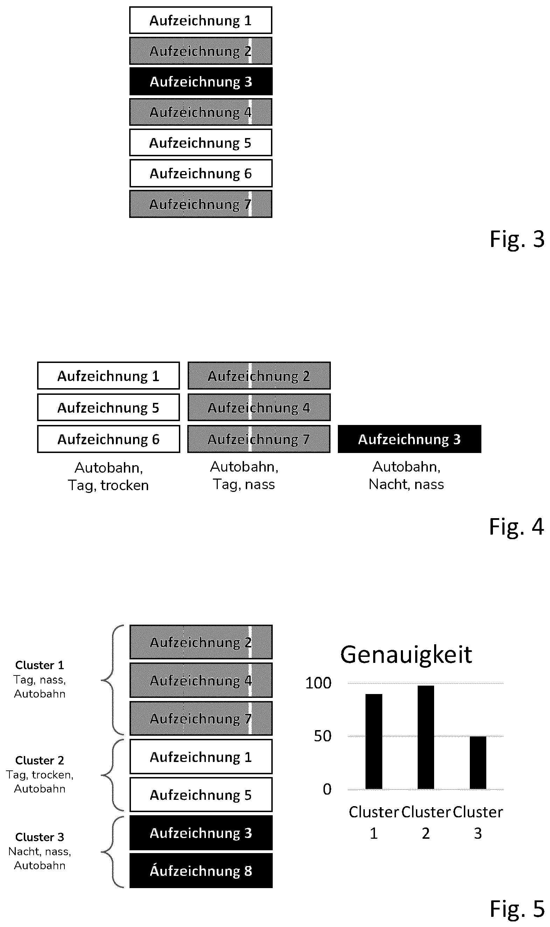

Fig. 3 stellt ein schematisches Diagramm eines beispielhaften Pakets von Video-Frames dar.

Eine übliche Weise, Sensordaten zum Trainieren oder Validieren eines autonomen Fahrzeugs zu erstellen, besteht darin, einen Testfahrer umherfahren zu lassen, während alle interessierenden Sensordaten aufgezeichnet werden, wie etwa Kameradaten, Lidar-Daten und/oder GPS-Daten. Die Daten sind unsortiert, sodass eine erste Aufzeichnung (Aufzeichnung 1) bei vollem Tageslicht auf einer Autobahn aufgenommen sein kann, während die nächste Aufzeichnung (Aufzeichnung 2) auch bei Tage, aber während eines Regenschauers, aufgenommen sein kann. Die nächste Aufzeichnung (Aufzeichnung 3) kann bei Nacht aufgenommen sein. Bei nachfolgenden Aufzeichnungen können sich die Umgebungsbedingungen in unvorhersehbarer Weise ändern.

Fig. 4 stellt ein schematisches Diagramm eines beispielhaften Pakets von Video-Frames dar, die gemäß einer zusätzlichen Tageszeit- und Wetterangabe gruppiert sind. Weil die Sichtbarkeit eines Objekts stark von der Tageszeit und den Wetterbedingungen abhängt, korreliert die Annotationsqualität für einen Objektdetektor mit diesen Umgebungsbedingungen.

Es ist vorteilhaft, die aufgezeichneten Frames in Pakete oder Cluster gemäß Tageszeit und Wetterbedingungen zu gruppieren. In dem gezeigten Beispiel wurden die Aufzeichnungen 1, 5 und 6 an einem trockenen Tag aufgezeichnet, während die Aufzeichnungen 2, 4 und 7 während eines Tages aufgezeichnet wurden, als es wegen Regenwetters nass war. Die Aufzeichnung 4 wurde unter nassen Bedingungen während der Nacht aufgezeichnet.

Weitere Kriterien könnten zum Gruppieren von aufgezeichneten Frames in Paketen oder Clustern verwendet werden. Ale ein Beispiel im Kontext des autonomen Fahrens können vom Kunden bereitgestellte Daten nicht nur auf Grundlage von Tag/Nacht und nass/trocken gebündelt werden, sondern auch auf Grundlage von Straßentyp, z.B. Innenstadtstraße gegenüber Autobahn.

Während ähnlicher Umgebungsbedingungen aufgezeichnete Frames werden zusammen verarbeitet, um Gruppen von Frames mit gleichmäßiger Annotationsqualität bereitzustellen. In einer Ausführungsform können verschiedene neuronale Netzwerke zum Annotieren der Frames auf Grundlage mindestens einer Umgebungsbedingung angewendet werden, die bei der Aufzeichnung des jeweiligen Frames bestand.

Fig. 5 stellt ein beispielhaftes Diagramm dar, das die Korrelation zwischen Umgebungsbedingungen und Qualität der Annotationen darstellt.

Eine erste Gruppe von Frames, der Cluster 1, umfassend die Aufzeichnungen 2, 4 und 7, wurde an einem regnerischen oder nassen Tag aufgezeichnet. Auf Grundlage einer manuellen Qualitätsüberprüfung liegt die Genauigkeit von Cluster 1 nahe bei 90 %. Somit müssen die Annotationen immer noch überprüft werden, aber das neuronale Netzwerk kann nach einigen wenigen Nachtrainings-Iterationen ausreichend präzise Daten erstellen.

Eine zweite Gruppe von Frames, der Cluster 2, umfassend die Aufzeichnungen 1 und 5, wurde an einem trockenen Tag aufgezeichnet. Auf Grundlage einer manuellen Qualitätsüberprüfung beträgt die Genauigkeit von Cluster 2 99 %. Da dies ausreichend genau ist, können Qualitätsüberprüfungen für Gruppen von Frames, die unter denselben Umgebungsbedingungen aufgezeichnet wurden, gänzlich übersprungen werden.

Eine dritte Gruppe von Frames, der Cluster 3, umfassend die Aufzeichnungen 3 und 8, wurde in einer trockenen Nacht aufgezeichnet. Auf Grundlage einer manuellen Qualitätsüberprüfung beträgt die Genauigkeit von Cluster 3 50 % und ist somit deutlich inakzeptabel. Unter denselben Umgebungsbedingungen aufgezeichnete Frames erfordern extensive manuelle Überprüfungen und ein verbessertes Training des neuronalen Netzwerks.

Weil die Frames gemäß den Umgebungsbedingungen gruppiert wurden, wird menschlicher Arbeitsaufwand bei denjenigen Gruppen von Frames eingesetzt, wo er am meisten gebraucht wird. Unter günstigen Bedingungen aufgenommene Frames können vollautomatisch verarbeitet werden. Auch die für ein erneutes Trainieren eines neuronalen Netzes erforderliche Rechenleistung bzw. Energie wird dort eingesetzt, wo dies spürbare Auswirkungen auf die Qualität der Annotationen hat.

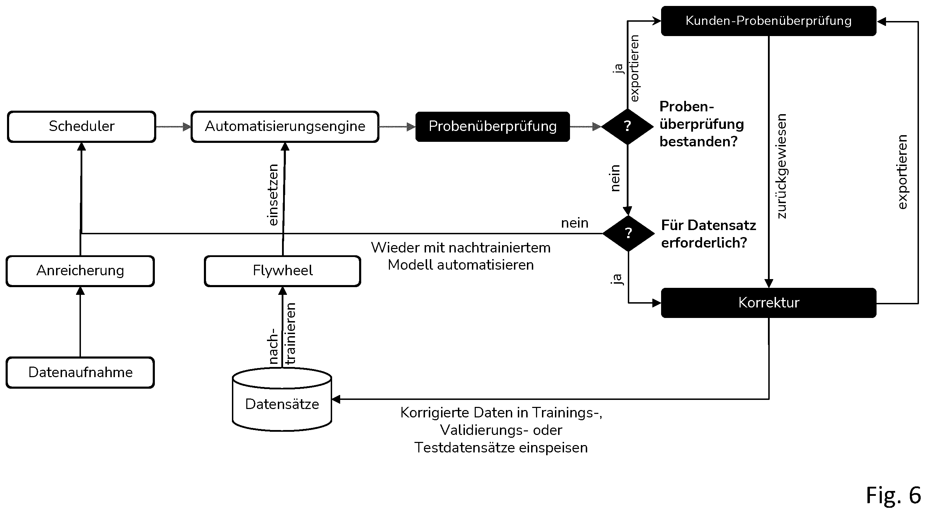

Fig. 6 ist ein schematisches Diagramm eines Automatisierungssystems, das ein Verfahren gemäß der Erfindung durchführt. Das Automatisierungssystem führt verschiedene Schritte des Verfahrens in dedizierten Komponenten aus und ist gut angepasst für die Ausführung in einer Cloud-Computerumgebung.

In einem ersten Schritt, "Datenaufnahme", werden unsortierte Aufzeichnungen von einem Kunden empfangen. Die Aufzeichnungen können normalisiert werden, z.B. in Frames aufgeteilt werden, um eine gleichmäßige Verarbeitung zu ermöglichen.

In einem zweiten Schritt, "Anreicherung", werden die Frames aus den Aufzeichnungen analysiert und automatisch mit Metadaten angereichert, die zum Messen der Automatisierungsqualität relevant sind. Dieser Schritt ist als eine Vorbedingung für die Automatisierung gezeigt, aber in alternativen Ausführungsformen und abhängig von den gewünschten Metadaten könnte die Anreicherung auch nach der Automatisierung auf Grundlage von Informationen durchgeführt werden, die während der Annotation gesammelt wurden, wie etwa beispielsweise die Verkehrsdichte oder der Abstand des Objekts zum Sensor. Im Kontext des autonomen Fahrens könnten für die Annotationsqualität relevante Metadaten oder Bedingungsattribute eine Geografie, eine Wetterbedingung, ein Straßentyp, Lichtverhältnisse und/oder eine Tageszeit sein. Für die Effizienz der Automatisierung ist es nützlich, eine Gruppe von Frames in den folgenden Schritten in ihrer Gesamtheit zu verarbeiten. Für Projekte mit verschachtelter Aufzeichnung und Verarbeitung von Frames kann es vorteilhaft sein, unter denselben Umgebungsbedingungen aufgezeichnete Frames hinzuzufügen, bis eine vorgegebene Clustergröße erreicht ist, bevor mit den weiteren Verarbeitungsschritten fortgefahren wird. Somit umfassen Anreicherung und Clusterbildung Techniken zum Hinzufügen statischer oder dynamischer Metadaten zu Aufzeichnungen, sowie Techniken zum Einfügen einzelner Aufzeichnungen in größere Cluster definierbarer Größe auf Grundlage der Metadatenanreicherung.

In einem dritten Schritt, "Scheduler", werden verschiedene Gruppen von Frames zur Annotation durch eine Automatisierungsengine eingeteilt, die eine oder mehrere Automatisierungskomponenten zum Annotieren der Frames mit einem oder mehreren Datenpunkten betreibt. Der Scheduler wählt die Gruppe von Frames zur Verarbeitung auf Grundlage der Verfügbarkeit neuer Versionen von Automatisierungskomponenten. Eine Automatisierungskomponente kann einen einzigen Datenpunkt erzeugen, wie etwa eine vertikale Linie oder eine Anzahl von zugehörigen Datenpunkten, wie etwa einen Begrenzungsrahmen und eine Objektklasse. Automatisierungskomponenten können neuronale Netzwerke oder eine beliebige andere Art von auf maschinellem Lernen basierter Technik sein, die aus Datenproben in einer überwachten, teilüberwachten oder unüberwachten Weise lernt.

In einem vierten Schritt, "Automatisierungsengine", wird eine Gruppe von Frames durch mindestens eine Automatisierungskomponente verarbeitet, die den Frames Datenpunkte zuordnet. Das Automatisierungssystem erzeugt jeden beliebigen Typ von Datenpunkt über Automatisierungskomponenten; Automatisierungskomponenten sind ein zentraler Teil des Arbeitsablaufs des Annotationssystems. Vorzugsweise tragen Datenpunkte Metadaten, die die Version der Automatisierungskomponente genau beschreiben, die zum Erzeugen des Ergebnisses verwendet wurde. Die Automatisierungsengine umfasst Techniken, um die relevanten Metadaten über Automatisierungskomponenten genau zu speichern.

In einem fünften Schritt, "Probenüberprüfung", wird eine Stichprobe von Frames zur Qualitätskontrolle ausgewählt. Bei der Qualitätskontrolle kann einem menschlichen Annotierer der Frame mit entsprechenden Annotationen, wie etwa einem Begrenzungsrahmen, gezeigt werden, und er kann gefragt werden, ob der Begrenzungsrahmen korrekt ist. Alternativ kann ihm eine Benutzerschnittstelle zum Justieren des Begrenzungsrahmens und/oder Hinzufügen eines Begrenzungsrahmens in einem Fall gezeigt werden, dass ein Objekt durch das neuronale Netzwerk übersehen wurde. Aus der Art und der Anzahl von durch den menschlichen Annotierer vorgenommenen Korrekturen bestimmt das Automatisierungssystem ein Qualitätsmaß.

In einem sechsten Schritt, "Probenüberprüfung bestanden?", bestimmt das System, ob die Annotationsqualität bzw. das Qualitätsmaß oberhalb eines vordefinierten Schwellenwerts liegt. Wenn das Automatisierungssystem feststellt, dass dies der Fall ist (ja), wird die Gruppe von Frames, die die ausgewählte Stichprobe umfasst, exportiert und an den Kunden geliefert. Wenn mindestens eine Gruppe von in einem bestimmten Satz von Umgebungsbedingungen aufgezeichneten Frames die Probenüberprüfung besteht, kann das Automatisierungssystem bestimmen, dass die Qualität von Annotationen für alle Gruppen von Frames mit denselben Umgebungsbedingungen ohne weitere Qualitätsüberprüfungen exportiert werden kann, und somit die Schritte fünf und sechs zu übergehen sind. In einer Ausführungsform kann das Automatisierungssystem die Anzahl von Gruppen mit denjenigen Umgebungsbedingungen zählen, die eine genügende Annotationsqualität aufwiesen, und kann die Überprüfung von Stichproben übergehen, sobald eine vordefinierte Anzahl von Gruppen die Probenüberprüfung bestanden hat. Wenn das Automatisierungssystem feststellt, dass die Gruppe von Frames die Probenüberprüfung nicht bestanden hat (nein), wird die Ausführung bei einem achten Schritt fortgesetzt, in dem das Automatisierungssystem ermittelt, ob unter den Umgebungsbedingungen der ausgewählten Stichprobe aufgezeichnete Frames für den Datensatz notwendig sind. Ob dies der Fall ist, kann von der Anzahl von unter denselben Bedingungen aufgezeichneten Frames abhängen, die bereits für das Training des Modells verwendet wurden. Wenn eine genügende Anzahl von Frames bereits zum Training benutzt worden waren, kann die Gruppe von Frames einfach nur in den dritten Schritt, "Scheduler", eingefügt werden, um erneut verarbeitet zu werden, sobald ein nachtrainiertes neuronales Netzwerk verfügbar ist.

In einem siebenten Schritt, "Kunden-Probenüberprüfung", kann der Kunde eine Stichprobe der exportierten Frames überprüfen, um sicherzustellen, dass die Annotationen seine Vorgaben und die geforderte Annotationsqualität einhalten. Wenn der Kunde die Gruppe von Frames zurückweist, wird eine Stichprobe oder die gesamte Gruppe von Frames im Schritt "Korrektur" manuell verarbeitet. Vorzugsweise erzwingt das Automatisierungssystem Probenüberprüfungen für alle nachfolgenden Gruppen mit denselben Umgebungsbedingungen, bis eine neue Gruppe von Frames die Probenüberprüfung des sechsten Schritts und/oder die Kunden-Probenüberprüfung des siebenten Schritts bestanden hat.

In einem neunten Schritt, "Korrektur", wird eine manuelle Annotation der Stichprobe von Frames, die die Probe nicht bestanden haben, oder einer Stichprobe oder der Gesamtheit der Gruppe von Frames durchgeführt, die durch den Kunden zurückgewiesen wurde. Die manuell annotierten Frames werden exportiert und an den Kunden für den siebenten Schritt, Kunden-Probenüberprüfung, geliefert. Die manuell annotierten Frames werden auch durch ein Einspeisen der korrigierten Daten in die Trainings-, Validierungs- oder Testdatensätze für das Nachtrainieren des neuronalen Netzwerks verwendet. Diese Datensätze sind symbolisch durch einen Zylinder dargestellt.

In einem zehnten Schritt, "Flywheel", wird ein Nachtrainieren des mindestens einen neuronalen Netzwerks oder der Automatisierungskomponente durchgeführt, die die bei der Probenüberprüfung zurückgewiesenen Datenpunkte erzeugt hatte. Durch das Nachtraining des neuronalen Netzwerks wird die Automatisierungsqualität verbessert. Vorzugsweise werden die Automatisierungskomponenten auf ein Niveau verbessert, wo keine manuelle Untersuchung für so viele Metadatencluster (d.h. unter einem bestimmten Satz von Umgebungsbedingungen aufgezeichnete Frames) wie möglich benötigt wird. Iterationszeiten für das Nachtraining müssen so kurz wie möglich sein, um schnelle Verbesserungen der Effizienz zu ermöglichen.

Flywheel umfasst Techniken zum effizienten Speichern von Trainingsdatensätzen für jede Automatisierungskomponente (jeden Datenpunkt), um Trainingsdatensatzänderungen zu überwachen und automatisch Nachtrainings auszulösen, sobald vordefinierte oder automatisch bestimmte Schwellenwerte von Trainingsdatensatzänderungen erfasst werden. Weiter umfasst Flywheel Techniken zum automatischen Einsetzen nachtrainierter Modelle in Automatisierungskomponenten und Benachrichtigen des Planers über Versionsänderungen bei Automatisierungskomponenten.

Wenn neue Daten gleichzeitig oder verschachtelt mit dem Annotieren von Frames aufgezeichnet werden, kann ein zusätzlicher Schritt gezielter Datenaufnahme durchgeführt werden. Automatisierungskomponenten werden durch viele Trainingsiterationen an einem ständig verfeinerten Datensatz verbessert, was die Varianz der wirklichen Welt mit der Zeit immer besser wiedergibt. Konfidenzniveaus pro Metadatencluster ermöglichen einen systematischen Ansatz zum Aufnehmen genau derjenigen Datenproben, wo Automatisierungsergebnisse am meisten leiden. Mit Bezugnahme auf Figur 5 wurden die Frames von Cluster 3 bei Nacht aufgezeichnet, und eine automatische Annotation führt aktuell zu einer inakzeptablen Annotationsqualität. Sobald dies in dem Überprüfungsschritt entdeckt wird, kann eine gezielte Datenaufnahme angefordert werden, bei der nächtliche Proben speziell zum Verbessern des Trainingsdatensatzes der Automatisierungskomponente unter dieser Umgebungsbedingung aufgezeichnet werden.

In einer bevorzugten Ausführungsform werden Niveau und Menge zusätzlicher Trainingsdaten eines bestimmten Typs (Clusters) abhängig von der Konfidenz bestimmt. Alle unter denselben Bedingungen aufgezeichneten Daten können für ein Nachtrainieren verwendet werden. Sobald Korrekturen von falsch annotierten Frames ausgeführt werden, werden sie direkt in den Trainingssatz der speziellen Automatisierungskomponente eingespeist. Jedoch brauchen gewöhnlich nicht alle Daten für einen bestimmten Cluster und Datenpunkt manuell korrigiert zu werden. Stattdessen werden nur Proben bis zum nächsten Nachtrainings-Schwellenwertniveau genommen und korrigiert. Der Rest der Daten wird automatisch für einen erneuten Durchlauf mit einer höheren Version der Automatisierungskomponente eingeplant. Die gezielte Datenaufnahme umfasst Techniken zum Auswählen interessierender Proben auf Grundlage von Metadatenclustern bis zu vordefinierten Mengen für die manuelle Korrektur. Weiter umfasst sie vorzugsweise Techniken, Proben schlechter Qualität zu markieren, die für ein Nachtraining für Automatisierungsläufe auf höheren Versionen der jeweiligen Automatisierungskomponente nicht benötigt werden.

Durch ein Verwenden der Korrelation zwischen den Umgebungsbedingungen, unter denen ein Frame aufgezeichnet wurde, und der resultierenden Qualität der Annotationen ermöglicht es das erfindungsgemäße Verfahren, manuelle Arbeit speziell bei der schnellen Verbesserung von neuronalen Netzwerken einzusetzen, die dann verwendet werden, um automatische Annotationen zum Liefern an den Kunden zu erstellen, und beschleunigt somit größere Annotationsprojekte beträchtlich, die z.B. für die Validierung notwendig sind.

Fachleute werden sich bewusst sein, dass die Reihenfolge zumindest einiger der Schritte des erfindungsgemäßen Verfahrens verändert werden kann, ohne vom Geltungsbereich der beanspruchten Erfindung abzuweichen. Während die vorliegende Erfindung bezüglich einer begrenzten Anzahl von Ausführungsformen beschrieben ist, werden Fachleute sich zahlreicher Modifikationen und Abwandlungen davon bewusst sein.

## Patentansprüche

1. Computerimplementiertes Verfahren zum automatischen Annotieren von Sensordatenframes, das Verfahren umfassend:
Empfangen einer Vielzahl von Sensordatenframes,
Gruppieren der Frames in eine Vielzahl von Paketen auf Grundlage mindestens eines Bedingungsattributs, wobei das Bedingungsattribut eine Umgebungsbedingung beschreibt, die während des Aufzeichnens des Sensordatenframes bestand,
Annotieren der Frames aus einem ersten Paket unter Verwendung eines neuronalen Netzwerks, wobei das Annotieren ein Zuweisen mindestens eines Datenpunkts zu jedem Frame umfasst, wobei das erste Paket Frames umfasst, für die das mindestens eine Bedingungsattribut in einem ausgewählten Wertebereich liegt,
Auswählen einer ersten Probe von einem oder mehreren Frames aus dem ersten Paket und Bestimmen eines Qualitätsmaßes für die Datenpunkte, wobei das Qualitätsmaß aus der Art und Anzahl von durch einen menschlichen Annotierer vorgenommenen Korrekturen bestimmt wird, wobei, wenn der Computer ermittelt, dass das Qualitätsmaß für mindestens einen Frame in der ersten Probe unterhalb eines vordefinierten Schwellenwerts liegt, das Verfahren weiter umfasst: Empfangen korrigierter Annotationen für die Frames in der ersten Probe, Nachtrainieren des neuronalen Netzwerks auf Grundlage der Frames in der ersten Probe,
Auswählen einer zweiten Probe von einem oder mehreren Frames aus den Frames des ersten Pakets, die nicht in der ersten Probe enthalten waren,
Annotieren der Frames der zweiten Probe mit dem nachtrainierten neuronalen Netzwerk und Bestimmen eines Qualitätsmaßes für die Datenpunkte,
Ermitteln, dass das Qualitätsmaß für die Frames in der zweiten Probe oberhalb eines vordefinierten Schwellenwerts liegt,
Annotieren der verbleibenden Frames des ersten Pakets mit dem nachtrainierten neuronalen Netzwerk, und
Exportieren der annotierten Frames des ersten Pakets.

2. Verfahren nach einem beliebigen vorangehenden Anspruch, wobei für Frames mit Bilddaten das Bedingungsattribut ein geografischer Ort, eine Tageszeit, eine Wetterbedingung, eine Sichtbedingung, ein Straßentyp, ein Abstand zu einem Objekt und/oder eine Verkehrsdichte ist und/oder wobei für Audio-Frames das Bedingungsattribut ein geografischer Ort, ein Geschlecht und/oder ein Alter einer Sprecherin/eines Sprechers, eine Raumgröße und/oder ein Maß von Hintergrundgeräuschen ist.

3. Verfahren nach einem beliebigen vorangehenden Anspruch, wobei der Schritt des Empfangens einer Vielzahl von Sensordatenframes einen Schritt des Vorverarbeitens der Frames umfasst, wobei mindestens eins der Bedingungsattribute für einen Frame bestimmt wird durch ein dediziertes neuronales Netzwerk auf Grundlage des Frames, und/oder mindestens eins der Bedingungsattribute für einen Frame bestimmt wird auf Grundlage zusätzlicher Sensordaten, die gleichzeitig mit den Frames aufgezeichnet wurden.

4. Verfahren nach einem beliebigen vorangehenden Anspruch, wobei für einen Bildframe der mindestens eine Datenpunkt eine Position eines Objekts, eine Klasse eines Objekts, eine Position einer Kante eines Begrenzungsrahmens, eine Korrelierung eines Objekts in dem Bildframe mit einem Objekt in einem vorangehenden oder nachfolgenden Bildframe und/oder eine Aktivierung einer Leuchtanzeige umfasst und/oder für Audio-Frames der mindestens eine Datenpunkt ein oder mehrere Textwörter umfasst, die aus dem Audio-Frame erkannt sind, wobei ein Datenpunkt aus einer Vielzahl von Audio-Frames abgeleitet werden kann.

5. Verfahren nach einem beliebigen vorangehenden Anspruch, wobei die erste Probe zwei oder mehr aus dem ersten Paket ausgewählte Frames umfasst, und wobei, sobald der Computer ermittelt, dass das Qualitätsmaß für die erste Probe unterhalb des vorgegebenen Schwellenwerts liegt, keine weiteren Berechnungen an den Frames aus dem ersten Paket durchgeführt werden, bis korrigierte Annotationen für die Frames in der ersten Probe empfangen werden.

6. Verfahren nach einem beliebigen vorangehenden Anspruch, wobei die Auswahl von Frames für die erste Probe von den Datenpunkten abhängt, für die das Qualitätsmaß zu bestimmen ist, insbesondere eine zufällige Auswahl einzelner Frames für die Objekterfassung und/oder eine zufällige Auswahl von Chargen aufeinanderfolgender Frames für die Objektverfolgung.

7. Verfahren nach einem beliebigen vorangehenden Anspruch, wobei die Schritte des Auswählens einer aktuellen Probe von einem oder mehreren Frames aus dem ersten Paket und des Bestimmens eines Qualitätsmaßes für die Datenpunkte sowie des Empfangens korrigierter Annotationen für die Frames in der aktuellen Probe und des Nachtrainierens des neuronalen Netzwerks auf Grundlage der Frames in der aktuellen Probe wiederholt werden, bis das Qualitätsmaß für die Frames in der aktuellen Probe oberhalb eines vordefinierten Schwellenwerts liegt oder das erste Paket keine verbleibenden Frames umfasst.

8. Verfahren nach einem beliebigen vorangehenden Anspruch, wobei das Annotieren von Sensordaten und das Aufzeichnen von Sensordaten abwechselnd oder gleichzeitig durchgeführt werden, und wobei, wenn ermittelt wird, dass das Qualitätsmaß für mindestens einen Frame in der ersten Probe unterhalb eines vordefinierten Schwellenwerts liegt, der Computer das Aufzeichnen zusätzlicher Sensordaten anfordert, für die das mindestens eine Bedingungsattribut in dem gewählten Wertebereich des ersten Pakets liegt.

9. Verfahren zum automatischen Annotieren von Sensordaten, die Frames umfassen, wie etwa Video- oder Audio-Frames, wobei das Verfahren durch mindestens einen Prozessor eines Host-Computers durchgeführt wird, wobei das Verfahren umfasst:
a) Empfangen einer Vielzahl von Sensordatenframes,
b) Gruppieren der Frames in Paketen auf Grundlage mindestens eines Bedingungsattributs, wobei das Bedingungsattribut eine Umgebungsbedingung beschreibt, die während des Aufzeichnens des Sensordatenframes bestand,
c) Annotieren der Frames aus einem ersten Paket unter Verwendung eines neuronalen Netzwerks, wobei das Annotieren ein Zuweisen mindestens eines Datenpunkts zu jedem Frame umfasst, wobei das erste Paket Frames umfasst, für die das mindestens eine Bedingungsattribut in einem ausgewählten Wertebereich liegt,
d) Auswählen einer ersten Probe von einem oder mehreren Frames aus dem ersten Paket und Bestimmen eines Qualitätsmaßes für die Datenpunkte,
e) Ermitteln, dass das Qualitätsmaß für mindestens einen Frame in der ersten Probe unterhalb eines vordefinierten Schwellenwerts liegt, wobei das Qualitätsmaß aus der Art und Anzahl von durch einen menschlichen Annotierer vorgenommenen Korrekturen bestimmt wird,
f) Empfangen korrigierter Annotationen für die Frames in der ersten Probe und Nachtrainieren des neuronalen Netzwerks mit den Frames in der ersten Probe,
g) Annotieren mindestens eines der verbleibenden Frames des ersten Pakets mit dem nachtrainierten neuronalen Netzwerk,
h) Auswählen einer zweiten Probe von einem oder mehreren Frames aus den mindestens einen annotierten verbleibenden Frames des ersten Pakets und Bestimmen eines Qualitätsmaßes für die Datenpunkte,
i) Ermitteln, dass das Qualitätsmaß für die Frames in der zweiten Probe oberhalb eines vordefinierten Schwellenwerts liegt,
j) Annotieren der verbleibenden Frames aus dem ersten Paket mit dem nachtrainierten neuronalen Netzwerk, und
k) Exportieren der annotierten Frames.

10. Nichtflüchtiges computerlesbares Medium, enthaltend Anweisungen, die, wenn sie durch einen Mikroprozessor eines Computersystems ausgeführt werden, das Computersystem veranlassen, ein Verfahren nach beliebigen der vorangehenden Ansprüche auszuführen.

11. Computersystem, umfassend einen Host-Computer, wobei der Host-Computer einen Mikroprozessor, einen Direktzugriffsspeicher, eine Anzeige, eine Vorrichtung für menschliche Eingabe und einen nichtflüchtigen Speicher, insbesondere eine Festplatte oder ein Festkörperlaufwerk, umfasst, wobei der nichtflüchtige Speicher Anweisungen umfasst, die, wenn sie durch den Mikroprozessor ausgeführt werden, das Computersystem veranlassen, ein Verfahren nach beliebigen der vorangehenden Ansprüche auszuführen.

## Claims

1. A computer-implemented method for automatically annotating sensor data frames, the method comprising:
Receiving a plurality of sensor data frames,
Grouping the frames into a plurality of packets based on at least one condition attribute, wherein the condition attribute describes an environmental condition that existed during recording of the sensor data frame,
Annotating the frames from a first packet using a neural network, wherein the annotating comprises assigning at least one data point to each frame, wherein the first packet comprises frames for which the at least one condition attribute is in a selected range of values,
Selecting a first sample of one or more frames from the first packet and determining a quality measure for the data points, wherein the quality measure is determined from the type and number of corrections made by a human annotator, wherein if the computer determines that the quality measure for at least one frame in the first sample is below a predefined threshold, the method further comprises: receiving corrected annotations for the frames in the first sample, retraining the neural network based on the frames in the first sample,
Selecting a second sample of one or more frames from the frames in the first packet that were not included in the first sample,
Annotating the frames of the second sample with the re-trained neural network and determining a quality measure for the data points,
Determining that the quality measure for the frames in the second sample is above a predefined threshold,
Annotating the remaining frames of the first packet with the post-trained neural network, and
Exporting the annotated frames of the first packet.

2. A method according to any preceding claim, wherein for frames comprising image data, the condition attribute is a geographical location, a time of day, a weather condition, a visibility condition, a road type, a distance to an object and/or a traffic density and/or wherein for audio frames, the condition attribute is a geographical location, a gender and/or an age of a speaker, a room size and/or a measure of background noise.

3. A method according to any preceding claim, wherein the step of receiving a plurality of sensor data frames comprises a step of pre-processing the frames, wherein at least one of the condition attributes for a frame is determined by a dedicated neural network based on the frame, and/or at least one of the condition attributes for a frame is determined based on additional sensor data recorded simultaneously with the frames.

4. A method according to any preceding claim, wherein for an image frame the at least one data point comprises a position of an object, a class of an object, a position of an edge of a bounding box, a correlation of an object in the image frame with an object in a preceding or subsequent image frame, and/or an activation of a light indicator, and/or for audio frames the at least one data point comprises one or more text words recognized from the audio frame, wherein a data point may be derived from a plurality of audio frames.

5. A method according to any preceding claim, wherein the first sample comprises two or more frames selected from the first packet, and wherein once the computer determines that the quality measure for the first sample is below the predetermined threshold, no further calculations are performed on the frames from the first packet until corrected annotations are received for the frames in the first sample.

6. A method according to any preceding claim, wherein the selection of frames for the first sample depends on the data points for which the quality measure is to be determined, in particular a random selection of individual frames for object detection and/or a random selection of batches of consecutive frames for object tracking.

7. A method according to any preceding claim, wherein the steps of selecting a current sample of one or more frames from the first packet and determining a quality measure for the data points and receiving corrected annotations for the frames in the current sample and retraining the neural network based on the frames in the current sample are repeated until the quality measure for the frames in the current sample is above a predefined threshold or the first packet comprises no remaining frames.

8. A method according to any preceding claim, wherein the annotating of sensor data and the recording of sensor data are performed alternately or simultaneously, and wherein, when it is determined that the quality measure for at least one frame in the first sample is below a predefined threshold, the computer requests the recording of additional sensor data for which the at least one condition attribute is within the selected range of values of the first packet.

9. A method for automatically annotating sensor data comprising frames, such as video or audio frames, the method being performed by at least one processor of a host computer, the method comprising:
(a) Receiving a plurality of frames of sensor data,
b) Grouping the frames into packets based on at least one condition attribute, wherein the condition attribute describes an environmental condition that existed during the recording of the sensor data frame,
c) Annotating the frames from a first packet using a neural network, wherein the annotating comprises assigning at least one data point to each frame, wherein the first packet comprises frames for which the at least one condition attribute is in a selected range of values,
d) Selecting a first sample of one or more frames from the first packet and determining a quality measure for the data points,
e) Determining that the quality measure for at least one frame in the first sample is below a predefined threshold, wherein the quality measure is determined from the type and number of corrections made by a human annotator,
f) Receiving corrected annotations for the frames in the first sample and retraining the neural network with the frames in the first sample,
g) Annotating at least one of the remaining frames of the first packet with the retrained neural network,
h) Selecting a second sample of one or more frames from the at least one annotated remaining frames of the first packet and determining a quality measure for the data points,
i) Determining that the quality measure for the frames in the second sample is above a predefined threshold,
j) Annotating the remaining frames from the first packet with the post-trained neural network, and
k) Exporting the annotated frames.

10. A non-transitory computer-readable medium comprising instructions which, when executed by a microprocessor of a computer system, cause the computer system to perform a method according to any of the preceding claims.

11. A computer system comprising a host computer, the host computer comprising a microprocessor, a random access memory, a display, a human input device and a non-volatile memory, in particular a hard disk or a solid state drive, the non-volatile memory comprising instructions which, when executed by the microprocessor, cause the computer system to perform a method according to any of the preceding claims.

## Revendications

1. Procédé mis en oeuvre par ordinateur pour l'annotation automatique de trames de données de capteurs, le procédé comprenant :
La réception d'une pluralité de trames de données de capteur,
Regrouper les trames en une pluralité de paquets sur la base d'au moins un attribut de condition, l'attribut de condition décrivant une condition d'environnement qui existait pendant l'enregistrement de la trame de données de capteur,
L'annotation des trames d'un premier paquet en utilisant un réseau neuronal, l'annotation comprenant l'attribution d'au moins un point de données à chaque trame, le premier paquet comprenant des trames pour lesquelles le au moins un attribut de condition est dans une plage de valeurs sélectionnée,
Sélectionner un premier échantillon d'une ou plusieurs trames à partir du premier paquet et déterminer une mesure de qualité pour les points de données, la mesure de qualité étant déterminée à partir du type et du nombre de corrections effectuées par un annotateur humain, dans lequel, si l'ordinateur détermine que la mesure de qualité pour au moins une trame dans le premier échantillon est inférieure à un seuil prédéfini, le procédé comprend en outre : la réception d'annotations corrigées pour les trames dans le premier échantillon, le réentraînement du réseau neuronal sur la base des trames dans le premier échantillon,
Sélectionner un deuxième échantillon d'une ou plusieurs trames parmi les trames du premier paquet qui n'étaient pas incluses dans le premier échantillon,
Annoter les trames du deuxième échantillon avec le réseau neuronal post-entraîné et déterminer une mesure de qualité pour les points de données,
Déterminer que la mesure de qualité pour les trames du deuxième échantillon est supérieure à un seuil prédéfini,
Annoter les trames restantes du premier paquet avec le réseau neuronal post-entraîné, et
Exporter les trames annotées du premier paquet.

2. Procédé selon l'une quelconque des revendications précédentes, dans lequel, pour des trames de données d'image, l'attribut de condition est un emplacement géographique, une heure du jour, une condition météorologique, une condition de visibilité, un type de route, une distance par rapport à un objet et/ou une densité de trafic et/ou dans lequel, pour des trames audio, l'attribut de condition est un emplacement géographique, un sexe et/ou un âge d'un locuteur, une taille de pièce et/ou une mesure de bruit de fond.

3. Procédé selon l'une quelconque des revendications précédentes, dans lequel l'étape de réception d'une pluralité de trames de données de capteur comprend une étape de prétraitement des trames, dans lequel au moins un des attributs de condition pour une trame est déterminé par un réseau neuronal dédié sur la base de la trame, et/ou au moins un des attributs de condition pour une trame est déterminé sur la base de données de capteur supplémentaires enregistrées simultanément avec les trames.

4. Procédé selon l'une quelconque des revendications précédentes, dans lequel, pour une trame d'image, le au moins un point de données comprend une position d'un objet, une classe d'un objet, une position d'un bord d'un cadre de délimitation, une corrélation d'un objet dans la trame d'image avec un objet dans une trame d'image précédente ou suivante et/ou une activation d'un indicateur lumineux et/ou, pour des trames audio, le au moins un point de données comprend un ou plusieurs mots de texte reconnus à partir de la trame audio, un point de données pouvant être dérivé d'une pluralité de trames audio.

5. Procédé selon l'une quelconque des revendications précédentes, dans lequel le premier échantillon comprend deux trames ou plus sélectionnées à partir du premier paquet, et dans lequel, une fois que l'ordinateur détermine que la mesure de qualité pour le premier échantillon est inférieure au seuil prédéterminé, aucun autre calcul n'est effectué sur les trames du premier paquet jusqu'à ce que des annotations corrigées soient reçues pour les trames dans le premier échantillon.

6. Procédé selon l'une quelconque des revendications précédentes, dans lequel la sélection de trames pour le premier échantillon dépend des points de données pour lesquels la mesure de qualité doit être déterminée, en particulier une sélection aléatoire de trames individuelles pour la détection d'objets et/ou une sélection aléatoire de lots de trames consécutives pour le suivi d'objets.

7. Procédé selon l'une quelconque des revendications précédentes, dans lequel les étapes de sélection d'un échantillon courant d'une ou plusieurs trames à partir du premier paquet et de détermination d'une mesure de qualité pour les points de données, ainsi que de réception d'annotations corrigées pour les trames dans l'échantillon courant et de réentraînement du réseau neuronal sur la base des trames dans l'échantillon courant sont répétées jusqu'à ce que la mesure de qualité pour les trames dans l'échantillon courant soit supérieure à un seuil prédéfini ou que le premier paquet ne comprenne aucune trame restante.

8. Procédé selon l'une quelconque des revendications précédentes, dans lequel l'annotation de données de capteur et l'enregistrement de données de capteur sont effectués en alternance ou simultanément, et dans lequel, lorsqu'il est déterminé que la mesure de qualité pour au moins une trame dans le premier échantillon est inférieure à un seuil prédéfini, l'ordinateur demande l'enregistrement de données de capteur supplémentaires pour lesquelles ledit au moins un attribut de condition est dans la plage de valeurs sélectionnée du premier paquet.

9. Procédé d'annotation automatique de données de capteur comprenant des trames, telles que des trames vidéo ou audio, le procédé étant mis en oeuvre par au moins un processeur d'un ordinateur hôte, le procédé comprenant :
a) La réception d'une pluralité de trames de données de capteur,
b) Regrouper les trames en paquets sur la base d'au moins un attribut de condition, l'attribut de condition décrivant une condition environnementale qui existait pendant l'enregistrement de la trame de données de capteur,
c) L'annotation des trames d'un premier paquet en utilisant un réseau neuronal, l'annotation comprenant l'attribution d'au moins un point de données à chaque trame, le premier paquet comprenant des trames pour lesquelles le au moins un attribut de condition est dans une plage de valeurs sélectionnée,
d) Sélectionner un premier échantillon d'une ou plusieurs trames à partir du premier paquet et déterminer une mesure de qualité pour les points de données,
e) Déterminer que la mesure de qualité pour au moins une trame dans le premier échantillon est inférieure à un seuil prédéfini, la mesure de qualité étant déterminée à partir du type et du nombre de corrections effectuées par un annotateur humain,
f) Recevoir des annotations corrigées pour les trames dans le premier échantillon et réentraîner le réseau neuronal avec les trames dans le premier échantillon,
g) Annoter au moins l'une des trames restantes du premier paquet avec le réseau neuronal post-entraîné,
h) Sélectionner un deuxième échantillon d'une ou plusieurs trames parmi les au moins une trame restante annotée du premier paquet et déterminer une mesure de qualité pour les points de données,
i) Déterminer que la mesure de qualité pour les trames dans le deuxième échantillon est supérieure à un seuil prédéfini,
j) Annoter les trames restantes du premier paquet avec le réseau neuronal post-entraîné, et
k) Exporter les trames annotées.

10. Un support non volatil lisible par ordinateur, contenant des instructions qui, lorsqu'elles sont exécutées par un microprocesseur d'un système informatique, amènent le système informatique à exécuter un procédé selon l'une quelconque des revendications précédentes.

11. Système informatique comprenant un ordinateur hôte, l'ordinateur hôte comprenant un microprocesseur, une mémoire vive, un afficheur, un dispositif d'entrée humaine et une mémoire non volatile, notamment un disque dur ou un lecteur à semi-conducteurs, la mémoire non volatile comprenant des instructions qui, lorsqu'elles sont exécutées par le microprocesseur, amènent le système informatique à exécuter un procédé selon l'une quelconque des revendications précédentes.
